# EUROPÄISCHE PATENTSCHRIFT

(11) **EP 0 827 994 B1**
(45) Veröffentlichungstag und Bekanntmachung des Hinweises auf die Patenterteilung: **18.12.2002**
(21) Anmeldenummer: 97112262.7
(22) Anmeldetag: 17.07.1997
(51) Int. Cl.: C09J 151/08, C08F 255/00, C09J 151/06

(54) **Verwendung von silangepfropften amorphen Poly-alpha-Olefinen als feuchtigkeitsvernetzender Klebrohstoff oder Klebstoff**
Use of grafted amorphous poly-alfa-olefins as moisture-curable raw material for adhesives and as adhesives
Utilisation de polyoléfines amorphes greffées par des silanes comme matière première d'adhésifs et comme adhésifs

(30) Priorität: 04.09.1996 DE 19635882; 12.06.1997 DE 19724835
(43) Veröffentlichungstag der Anmeldung: 11.03.1998
(73) Patentinhaber: Degussa AG, 40474 Düsseldorf (DE)
(72) Erfinder: Wey, Hans Günther, Dr., 45470 Mülheim (DE); Bickert, Peter, Dr., 48249 Dülmen (DE)

(56) Entgegenhaltungen:
- DE-A- 4 000 695
- DE-A- 4 000 696

## Beschreibung

Gegenstand der Anmeldung ist die Verwendung bestimmter silangepfropfter amorpher Poly-α-Olefine als feuchtigkeitsvernetzender Klebrohstoff bzw. als Bestandteil eines feuchtigkeitsvernetzenden Klebstoffsystems, insbesondere für Anwendungen in der Bau-, Holz- und Fahrzeugindustrie, wobei der Klebstoff in erster Linie als Schmelzkleber verwendet wird

Amorphe Poly-α-Olefine dienen als Klebrohstoffe für eine breite Palette von Anwendungen; der Einsatzbereich erstreckt sich dabei vom Hygienesektor uber Laminierungen und Verpackungskleber bis zum konstruktiven Kleben und Verwendungen in der Holzverarbeitung In den meisten dieser Anwendungen zeichnen sich diese Klebrohstoffe durch hohe Adhäsion zu den verschiedenen Substraten, starke Kohäsion und gute Beständigkeit gegenüber Chemikalien bei ausgezeichnetern Preis-Leistungs-Verhältnis aus.

Viele anspruchsvolle Anwendungen, z B die Verklebung von Glas, Keramik, Metall sowie unterschiedlichen Kunststoffkombinationen können von amorphen Poly-α-Olefinen durch Formulierung des Klebrohstoffes mit einer Vielzahl von Komponenten und Additiven wie z B Klebharzen, Wachsen, anderen Polymeren, Weichmachern und Stabilisatoren in einem gewissen Umfang realisiert werden Dennoch gelingt es nicht in jedem Fall, die erforderlichen Adhäsions- und Kohäsionswerte zu erreichen. Daruber hinaus sind die Wärmestandfestigkeiten von Verklebungen, die mit amorphen Poly-α-Olefinen oder auf diesen Substanzen basierenden Formulierungen durchgeführt werden, für bestimmte Anwendungen nicht hoch genug, so daß die Anwender in vielen Fällen auf teurere reaktive Klebesysteme wie Polyurethan-, Epoxid- oder Silikon-Kleber ausweichen mussen.

In der DE-OS 40 00 695 sind mit reaktiven Monomeren gepfropfte amorphe Poly-α-Olefine beschrieben, die als Schmelzklebstoffe sowie für Teppichschwerbeschichtungsmassen Verwendung finden. Durch die herstellungsbedingt niedrige molekulare Uneinheitlichkeit besitzen diese gepfropften Poly-α-Olefine eine verbesserte Kohäsion. Für anspruchsvolle Verklebungen reicht die so erzielte Kohäsion aber noch nicht aus; auch hinsichtlich der Wärmestandfestigkeit ergeben sich keine deutlichen Verbesserungen.

Zur Verbesserung der Kohäsion und der Wärmestandfestigkeit der Kleberschicht müssen auch zwischen den Polymerketten der Kleberschicht chemische Bindungen ausgebildet werden. Ein derartiges System wird in der DE-OS 195 16 457 beschrieben. Das dort beschriebene System besteht jedoch aus zwei unterschiedlichen Polymerkomponenten, wobei es sich bei der einen um ein silangepfropftes Polyolefin wie z. B. Ethylen-Vinylacetat-Copolymer (EVA) handelt und bei der anderen um ein mit Maleinsäureanhydrid (MSA) gepfropftes Polyolefin (z. B. EVA), dem ein Vernetzungsbeschleuniger zugesetzt wird. Die Handhabung dieses Mehrkomponentensystems ist wegen der zwei Komponenten, die zwingend erforderlich sind, und dem daraus resultierenden Logistik- und Mischaufwand arbeitsintensiv. Darüber hinaus sind MSA-gepfropfte Systeme aufgrund ihrer toxikologischen Eigenschaften für eine Nutzung im Lebensmittelsektor nicht geeignet; dies schränkt die Einsetzbarkeit des dort beanspruchten Systems weiter ein.

Überraschenderweise wurde nun gefunden, daß eine Verklebung mit hoher Adhäsion, hoher Kohäsion und hoher Wärmestandfestigkeit erhalten wird, wenn ein Klebstoff verwendet wird, der ein silangepfropftes weitgehend amorphes Poly-α-Olefin enthält, und nach der Verklebung der Klebstoff durch Wasser vernetzt wird, wobei das aufzupfropfende Silan mindestens eine olefinische Doppelbindung sowie eine bis drei direkt mit dem Silicium verbundene Alkoxygruppen besitzt.

Das weitgehend amorphe Poly-α-Olefin ist ein ataktisches Polypropylen (APP), ataktisches Polybuten-(1) oder vorzugsweise ein Copolymer oder ein Terpolymer mit folgender Monomerenzusammensetzung:

| | |
|---|---|
| 0 bis 95 | Gew.-% eines α-Olefins mit 4 bis 10 Kohlenstoffatomen (bevorzugt 3 bis 95 Gew.-%), |
| 5 bis 100 | Gew.-% Propen (bevorzugt 5 bis 97 Gew.-%) und |
| 0 bis 20 | Gew.-% Ethen. |

Das weitgehend amorphe Poly-α-Olefin ist entweder vollständig amorph oder weist nur eine geringe Kristallinität auf. Im allgemeinen soll ein Kristallinitatsgrad von 25 %, bestimmt über Röntgenbeugung, nicht überschritten werden.

Das aufzupfropfende Silan besitzt vorzugsweise drei direkt mit dem Silicium verbundene Alkoxygruppen Beispielhaft seien Vinyltrimethoxysilan (VTMO), Vinyltriethoxysilan, Vinyl-tris(2-methoxy-ethoxy)silan, 3-Methacryloxypropyltrimethoxysilan (MEMO; H₂C=C(CH₃)COO(CH₂)₃-Si(OCH₃)₃), 3-Methacryloxypropyltriethoxysilan, Vinyldimethylmethoxysilan oder Vinylmethyldibutoxysilan, genannt Das Silan wird bei der Pfropfung üblicherweise in Mengen von 0,1 bis 10 Gew.-%, vorzugsweise 0,5 bis 5 Gew.-%, bezogen auf das Poly-α-Olefin, eingesetzt.

Das ungesättigte Silan kann auf das weitgehend amorphe Poly-α-Olefin nach allen Methoden des Standes der Technik aufgepfropft werden, beispielsweise in Lösung oder bevorzugt in der Schmelze, wobei ein Radikalspender in ausreichender Menge eingesetzt wird. Eine geeignete Arbeitsweise kann der DE-OS 40 00 695 entnommen werden, auf die ausdrücklich Bezug genommen wird. Beispielsweise können folgende Radikalspender verwendet werden: Diacylperoxide wie z. B. Dilaurylperoxid oder Didecanoylperoxid, Alkylperester wie z. B. tert. Butylperoxy-2-ethylhexanoat, Perketale wie z. B. 1,1-Di(tert butylperoxy)-3,3,5-trimethylcyclohexan oder 1,1-Di(tert butylperoxy)cyclohexan, Dialkylperoxide wie z B. tert.Butylcumylperoxid, Di(tert butyl)peroxid oder Dicumylperoxid, C-Radikalspender wie z. B. 3,4-Dimethyl-3,4-diphenylhexan oder 2,3-Dimethyl-2,3-diphenylbutan sowie Azoverbindungen wie z. B. 2,2'-Azo-di(2-acetoxypropan).

Zur Erhöhung der Vernetzungsgeschwindigkeit kann dem silangepfropften, weitgehend amorphen Poly-α-Olefin ein Vernetzungsbeschleuniger, üblicherweise eine Zinnorganylverbindung wie z. B. Dibutylzinndilaurat, zugesetzt werden. Dies kann entweder in reiner Form oder zur besseren Dosierbarkeit in Form eines Masterbatches aus einem beliebigen Poly-α-Olefin erfolgen. Die Zugabe des Beschleunigers kann vor dem Aufschmelzen in Form einer "Trockenmischung" oder nach dem Aufschmelzen geschehen. Dabei haben sich Gehalte von 0,001 bis 20 Gew.-%, vorzugsweise 0,01 bis 5 Gew.-%, als geeignet erwiesen.

Andererseits läßt sich durch Zusatz nicht gepfropfter, leicht hydrolysierender Silane wie Hexadecyltrimethoxysilan oder Hexadecyltriethoxysilan die Vernetzungsgeschwindigkeit verringern bzw. die Lagerstabilitat erhöhen. Das in die Kleberschicht eindiffundierende Wasser wird von diesen Silanen zumindest teilweise abgefangen, so daß es länger dauert, bis das zur Vernetzung des silangepfropften Poly-α-Olefins notwendige Wasser in der Klebstoffschicht zur Verfügung steht. Es empfiehlt sich, zu diesem Zweck Silane mit langkettigen Alkylresten zu verwenden, da diese beim Aufschmelzen der Produkte nicht verdampfen und so nicht als Wirkstoff verlorengehen und darüber hinaus keine Entsorgungs- und Arbeitsschutzprobleme verursachen.

Ob für eine der beanspruchten Anwendungen der Einsatz von Vernetzungsbeschleunigern oder Vernetzungsverzogerern erforderlich ist, kann der Fachmann anhand einiger orientierender Versuche leicht selbst ermitteln.

Zur Einstellung der für den Klebstoffanwender notwendigen Eigenschaften wie Klebkraft, Anfangshaftung, Viskosität, Härte, Elastizität, Temperatur- und Oxidationsstabilität usw können dem silangepfropften Poly-α-Olefin weitere Substanzen zugesetzt werden, die üblicherweise zur Einstellung der gewünschten Klebstoffeigenschaften verwendet werden, wie z. B Klebharze (etwa 0,1 bis 50 Gew.-%), Wachse (etwa 0,1 bis 50 Gew -%), andere Polymere (etwa 0,1 bis 80 Gew.-%), Weichmacher (etwa 0,1 bis 20 Gew.-%) sowie darüber hinaus die für Kunststoffe üblichen Additive wie z. B. Wärme- und Lichtstabilisatoren, optische Aufheller, Antistatika, Gleit- und Antiblockmittel, Nucleierungsmittel, Füll- und Farbstoffe, Pigmente sowie flammhemmende Mittel Dabei ist naturgemäß darauf zu achten, daß in den Zuschlagsstoffen enthaltenes Wasser die Vernetzungsgeschwindigkeit des Klebstoffes erhohen kann.

Der Klebstoff sollte - neben den übrigen Zusätzen - hierbei mindestens 5 Gew.-%, bevorzugt mindestens 10 Gew.-% an silangepfropftem Poly-α-Olefin enthalten Selbstverständlich kann das silangepfropfte Poly-α-Olefin aber auch ohne jegliche Zugabe verwendet werden.

Geeignete Klebharze sind beispielsweise synthetisches Terpenharz, modifizierte Terpenharze, aliphatische Kohlenwasserstoffharze, vollständig oder teilweise hydrierte Kolophoniumglycerinesterharze, Flüssigharze, hydrierte cyclische Kohlenwasserstoffharze, aliphatisch-aromatische Kohlenwasserstoffharze, hydrierte Pentaerythritester des Kolophoniumharzes oder aromatisch modifizierte Kohlenwasserstoffharze. Als Wachse können grundsätzlich alle üblichen Typen verwendet werden; geeignet sind z. B. mikrokristalline Wachse, synthetische Wachse vom Fischer-Tropsch- oder Polyolefintyp sowie Tafelparaffine und Amidwachse Als andere Polymere kommen in erster Linie Kautschuke, insbesondere Butylkautschuk oder SEBS (teilhydrierte Styrol-Butadien-Styrol-Blockcopolymere) oder Polyolefine infrage, wobei als Polyolefin in erster Linie isotaktisches Polypropylen und/oder ein amorphes Poly-α-Olefin Verwendung findet Geeignete Weichmacher sind u. a paraffinische oder naphthenische Öle sowie niedermolekulares Poly-1-buten bzw. Polyisobuten.

Der Auftrag des silangepfropften amorphen Poly-α-Olefins geschieht als Reinsubstanz oder in Form der oben angegebenen Formulierungen auf die zu verklebenden Substrate in Form einer Schmelze bei Temperaturen zwischen 50 °C und 300 °C, vorzugsweise zwischen 100 °C und 200 °C, besonders bevorzugt zwischen 130 °C und 180 °C. Dazu kann man sich verschiedenster Auftragstechniken wie z B. Walzenauftrag, Breitschlitzdüse, Rakelauftrag, Punktauftrag, multiline-Auftrag, Rototherm-Auftrag, Sprühauftrag im swirling-Verfahren oder breitflächig mit melt blow- bzw. air assisted spray-Verfahren bedienen. Die Substrate werden anschließend innerhalb der sogenannten "Offenen Zeit", deren Dauer von der Zusammensetzung der aufgetragenen Mischung abhängig ist, zusammengefügt. Wird der aufgetragene Kleber durch vorgeheizte Substrate, Walzen etc. oder Strahlung auf der Auftragstemperatur gehalten, so steht für die Zusammenfügung der Substrate naturgemäß eine längere Zeit zur Verfugung.

Die Vernetzung des Systems erfolgt durch Wasser; dies geschieht je nach Erfordernissen des Anwenders und Eigenschaften der Substrate mittels Wasserdampf aus der Umgebungsluft, durch Dampf- bzw Heißwasserbehandlung oder durch Wasser, welches in den Substraten enthalten ist.

Mit dem erfindungsgemäßen Klebstoff können unterschiedliche Werkstoffe in sämtlichen möglichen Kombinationen sowie in allen Konfektionierungsformen, z. B. als Folien, Platten, Gewebe usw. verklebt werden. Beispielhaft seien folgende Werkstoffe aufgeführt: Polyolefine (insbesondere Polyethylen, Polypropylen, Polybuten-(1)), Polystyrol, Polyvinylchlorid, Polykondensate (insbesondere Polyester, Polyamide, Polyurethane), Kautschuke (beispielsweise EPM, EPDM, NBR, SBS, SBR, BR, Naturkautschuk, Butylkautschuk, Chloroprenkautschuk, Silikonkautschuk), Holz, Cellulosematerialien, Papiere und Kartonagen aller Art, Faserplatten, Metalle (u a Eisen, Stahl, Edelstahl, Aluminium, Messing, Kupfer), Glas, Keramik oder Beton.

Hierbei wird eine außerordentlich starke Adhäsion insbesondere hinsichtlich Substraten erzielt, deren Oberfläche OH-Gruppen tragt Darüber hinaus steigt unerwarteterweise auch die Adhäsion zu Künststoffen, deren Verklebung mit amorphen Poly-α-Olefinen normalerweise schwierig ist.

Wie für Schmelzkleber typisch, zeigen diese Klebstoffe bereits wenige Minuten nach dem Auftrag eine Anfangsfestigkeit, die es in vielen Fällen erlaubt, auf Montagehilfen zu verzichten.

Die Erfindung soll im folgenden beispielhaft erläutert werden.

### Beispiel 1

Es wurde ein weitgehend amorphes Poly-α-Olefin (APAO) folgender Monomerenzusammensetzung verwendet:

| | |
|---|---|
| 6 | Gew.-% Ethen |
| 64 | Gew -% Propen |
| 30 | Gew.-% Buten-(1) |

In einem Doppelschneckenextruder (Berstorff ZE 40) wird eine aus

| | |
|---|---|
| 92,9 | Gew.-% dieses APAO, |
| 6,0 | Gew.-% Vinyltrimethoxysilan (DYNASILAN® VTMO) und |
| 1,1 | Gew.-% Dicumylperoxid |

bestehende Mischung unter Luft- und Feuchtigkeitsausschluß bei einer Temperatur von 155 - 160 °C gemischt und über eine Verweilzeit von ca 90 s auf dieser Temperatur gehalten Das überschüssige VTMO wird in der letzten Zone des Extruders bei einem Vakuum von ca. 20 mbar verdampft und in Kühlfallen kondensiert. Das Produkt wird durch Zugabe von IRGANOX 1076 stabilisiert.

Die Eigenschaften des Ausgangsmaterials und des Produktes sind in der folgenden Tabelle aufgelistet.

| Eigenschaft | Meßmethode | Einheit | APAO | Reaktionsprodukt |
|---|---|---|---|---|
| Schmelzviskosität bei 190 °C | in Anlehnung an DIN 53019 (Schergeschw 30,5 [l/s]) | mPa s | ca 50 000 | ca 6 000 |
| Erweichungspunkt (R.& K) | in Anlehnung an DIN 52011 | °C | 107 | 98 |
| Nadelpenetration (100/25/5) | in Anlehnung an DIN 52010 | 0,1 mm | 14 | 15 |
| Molmasse Mₙ | GPC in Anlehnung an DIN 55672 | g/mol | 18 100 | 10 600 |
| M_{w} | | | 92 000 | 38 000 |
| U | | | 4,1 | 2,6 |

### Beispiel 2:

Das silangepfropfte amorphe Poly-α-Olefin aus Beispiel 1 wird bei 170 °C im Trockenschrank in einer N₂-Atmosphäre 1 h aufgeschmolzen und anschließend bei einer Temperatur von 170 °C auf einen Holzprüfkörper appliziert. Dieser wird innerhalb von 0,5 min mit einem weiteren Holzprufkörper auf einer Fläche von 4 cm² einfach überlappend zusammmengefugt und 5 Minuten mit einem Gewicht von 2 kg aneinandergepreßt. Anschließend lagert man das Verklebungsmuster 14 Tage bei 23 °C und 60 % rel. Luftfeuchtigkeit und führt dann eine Zugprufung und eine Prüfung der Wärmestandfestigkeit durch. Die Ergebnisse dieser Messungen sind in Tabelle 1 dargestellt.

### Beispiel 3:

Das silangepfropfte amorphe Poly-α-Olefin aus Beispiel 1 wird bei 170 °C im Trockenschrank in einer N₂-Atmosphare 1 h aufgeschmolzen. Anschließend werden 5 Massen-% eines Beschleunigers in Form eines Masterbatches aus 98 Gew.-% eines amorphen Poly-α-Olefins (VESTOPLAST® 708) und 2 Gew.-% Dibutylzinndilaurat zugegeben. Nach Homogenisieren der Schmelze wird die Mischung bei einer Temperatur von 170 °C auf einen Holzprüfkörper appliziert. Dieser wird in der in Beispiel 2 beschriebenen Weise mit einem weiteren Holzprüfkörper zusammengefügt, gelagert und geprüft. Die Ergebnisse der Messungen sind in Tabelle 1 dargestellt.

### Beispiel 4 (nicht erfindungsgemäß)

Zwei Holzprüfkörper werden in der in Beispiel 2 beschriebenen Weise mit dem unfunktionalisierten amorphen Poly-α-Olefin VESTOPLAST® 708 zusammengefügt, gelagert und geprüft. Die Ergebnisse dieser Messungen sind in Tabelle 1 dargestellt Das eingesetzte amorphe Poly-α-Olefin ist von der Monomerzusammensetzung der Kohlenwasserstoffkette und der Schmelzviskosität her dem im Beispiel 3 verwendeten silangepfropften amorphen Poly-α-Olefin weitestgehend vergleichbar.

### Beispiel 5

Das silangepfropfte amorphe Poly-α-Olefin aus Beispiel 1 wird in der in Beispiel 2 beschriebenen Weise aufgeschmolzen und bei einer Temperatur von 150 °C auf einen mit Aceton entfetteten Glasprüfkörper appliziert. Diese Beschichtung wird innerhalb von 0,5 Minuten auf einer Fläche von 4 cm² einfach überlappend mit einer weiteren ebenso entfetteten Glasplatte zusammmengefügt und 5 Minuten mit einem Gewicht von 2 kg aneinandergepreßt. Anschließend lagert man das Verklebungsmuster 20 Tage bei 23 °C und 60 % rel. Luftfeuchtigkeit und führt dann eine Zugprüfung und eine Prüfung der Wärmestandfestigkeit durch. Die Ergebnisse dieser Messungen sind in Tabelle 1 dargestellt.

### Beispiel 6

Das silangepfropfte amorphe Poly-α-Olefin aus Beispiel 1 und der in Beispiel 3 beschriebene Masterbatch werden in der dort beschriebenen Weise gemischt und die Mischung wird bei einer Temperatur von 150 °C auf einen mit Aceton entfetteten Glasprüfkörper appliziert. Dieser wird in der in Beispiel 5 beschriebenen Weise mit einem weiteren Glasprüfkorper zusammengefügt, gelagert und geprüft. Die Ergebnisse der Messungen sind in Tabelle 1 dargestellt.

### Beispiel 7 (nicht erfindungsgemäß)

Zwei entfettete Glasprüfkörper werden in der in Beispiel 5 beschriebenen Weise mit dem unfunktionalisierten amorphen Poly-α-Olefin VESTOPLAST® 708 zusammengefügt, gelagert und geprüft. Die Ergebnisse dieser Messungen sind in Tabelle 1 dargestellt.

### Beispiel 8.

Das silangepfropfte amorphe Poly-α-Olefin aus Beispiel 1 wird in der in Beispiel 2 beschriebenen Weise aufgeschmolzen und bei einer Temperatur von 150 °C auf einen Polyethylen-Prüfkörper appliziert. Diese Beschichtung wird innerhalb von 30 s auf einer Fläche von 4 cm² einfach überlappend mit einem Polyamid-6,6-Prüfkorper zusammmengefügt und 110 min mit einem Gewicht von 2 kg aneinandergepreßt Anschließend lagert man das Verklebungsmuster 24 h bei 23 °C und 60 % rel Luftfeuchtigkeit und führt dann eine Zugprufung und eine Prufung der Warmestandfestigkeit durch. Die Ergebnisse dieser Messungen sind in Tabelle 1 dargestellt.

### Beispiel 9.

Das silangepfropfte amorphe Poly-α-Olefin aus Beispiel 1 und der in Beispiel 3 beschriebene Masterbatch werden in der dort beschriebenen Weise gemischt und bei einer Temperatur von 150 °C auf einen Polyethylen-Prüfkörper appliziert Dieser wird in der in Beispiel 8 beschriebenen Weise mit einem Polyamid-6,6-Prufkorper zusammengefügt, gelagert und geprüft. Die Ergebnisse der Messungen sind in Tabelle 1 dargestellt.

### Beispiel 10 (nicht erfindungsgemäß):

Ein Polyethylen-Prufkörper wird in der in Beispiel 8 beschriebenen Weise mit dem unfunktionalisierten amorphen Poly-α-Olefin VESTOPLAST® 708 beschichtet, mit einem Polyamid-6,6-Prufkorper zusammengefügt, gelagert und geprüft Die Ergebnisse dieser Messungen sind in Tabelle 1 dargestellt.

### Beispiel 11:

Das silangepfropfte amorphe Poly-α-Olefin aus Beispiel 1 wird in der in Beispiel 2 beschriebenen Weise aufgeschmolzen und bei einer Temperatur von 150 °C auf einen mit Aceton entfetteten Keramikprüfkörper appliziert. Diese Beschichtung wird innerhalb von 0,5 Minuten auf einer Fläche von 4 cm² einfach überlappend mit einer weiteren ebenso entfetteten Keramikplatte zusammmengefügt und 5 Minuten mit einem Gewicht von 2 kg aneinandergepreßt. Anschließend lagert man das Verklebungsmuster 20 Tage bei 23 °C und 60 % rel. Luftfeuchtigkeit und führt dann eine Zugprüfung und eine Prüfung der Warmestandfestigkeit durch. Die Ergebnisse dieser Messungen sind in Tabelle 1 dargestellt.

### Beispiel 12

Das silangepfropfte amorphe Poly-α-Olefin aus Beispiel 1 und der in Beispiel 3 beschriebene Masterbatch werden in der dort beschriebenen Weise gemischt und die Mischung wird bei einer Temperatur von 150 °C auf einen mit Aceton entfetteten Keramikprüfkörper appliziert. Dieser wird in der in Beispiel 5 beschriebenen Weise mit einem weiteren Keramikprüfkörper zusammengefügt, gelagert und geprüft. Die Ergebnisse der Messungen sind in Tabelle 1 dargestellt.

### Beispiel 13 (nicht erfindungsgemäß)

Zwei entfettete Keramikprüfkörper werden in der in Beispiel 5 beschriebenen Weise mit dem unfunktionalisierten amorphen Poly-α-Olefin VESTOPLAST® 708 zusammengefügt, gelagert und gepruft. Die Ergebnisse dieser Messungen sind in Tabelle 1 dargestellt.

### Beispiel 14:

Das silangepfropfte amorphe Poly-α-Olefin aus Beispiel 1 wird in der in Beispiel 2 beschriebenen Weise aufgeschmolzen und bei einer Temperatur von 150 °C auf einen mit Aceton entfetteten Aluminium-Prüfkörper appliziert. Diese Beschichtung wird innerhalb von 30 s auf einer Fläche von 4 cm² einfach überlappend mit einer weiteren ebenso entfetteten Aluminiumplatte zusammmengefugt und 10 min mit einem Gewicht von 2 kg aneinandergepreßt Anschließend lagert man das Verklebungsmuster 14 Tage bei 23 °C und 60 % rel. Luftfeuchtigkeit und führt dann eine Zugprüfung und eine Prufung der Wärmestandfestigkeit durch. Die Ergebnisse dieser Messungen sind in Tabelle 1 dargestellt.

### Beispiel 15:

Das silangepfropfte amorphe Poly-α-Olefin aus Beispiel 1 und der in Beispiel 3 beschriebene Masterbatch werden in der dort beschriebenen Weise gemischt und die Mischung wird bei einer Temperatur von 150 °C auf einen mit Aceton entfetteten Aluminium-Prüfkörper appliziert. Dieser wird in der in Beispiel 5 beschriebenen Weise mit einem weiteren Aluminium-Prüfkörper zusammengefügt, gelagert und geprüft. Die Ergebnisse der Messungen sind in Tabelle 1 dargestellt.

### Beispiel 16 (nicht erfindungsgemäß):

Zwei entfettete Aluminium-Prüfkörper werden in der in Beispiel 5 beschriebenen Weise mit dem unfunktionalisierten amorphen Poly-α-Olefin VESTOPLAST® 708 zusammengefügt, gelagert und geprüft. Die Ergebnisse dieser Messungen sind in Tabelle 1 dargestellt.

**Tabelle 1:**

| Meßergebnisse der Beispiele 2 bis 16 | | |
|---|---|---|
| Beispiel | Wärmestandfestigkeit nach WPS 68 [°C] | Zugscherfestigkeit nach DIN 53283 [N/mm²] |
| 2 | 165 | 2,3 |
| 3 | 185 | 3,5 |
| 4 a) | 75 | 0,7 |
| 5 | b) | 2,9 |
| 6 | b) | 3,4 |
| 7 a) | b) | 〈 0,1 |
| 8 | b) | 1,6 |
| 9 | b) | 1,3 |
| 10 a) | b) | 1 |
| 11 | b) | 3,1 |
| 12 | b) | 3,7 |
| 13 a) | b) | 〈 0,1 |
| 14 | b) | 0,8 |
| 15 | b) | 0,6 |
| 16 a) | b) | 0,4 |

| | | |
|---|---|---|
| a) nicht erfindungsgemäß (Vergleichsbeispiele) | | |
| b) nicht gemessen | | |

### Beispiel 17:

Das silangepfropfte amorphe Poly-α-Olefin aus Beispiel 1 wird in der in Beispiel 2 beschriebenen Weise aufgeschmolzen und bei einer Temperatur von 130 °C mit einem 20 µm-Rakel auf eine Polyethylen-Folie appliziert; das Auftragsgewicht beträgt hierbei ca. 11 g/m². Auf diese Beschichtung wird ein PA-Vlies aufgelegt und mit einer auf 80 °C vorgewärmten Walze mit einem Druck von 500 hPa angedrückt. Anschließend lagert man das Verklebungsmuster 24 h bei 23 °C und 60 % rel. Luftfeuchtigkeit und mißt dann die Zugscherfestigkeit nach DIN 53283. Das Ergebnis dieser Messung ist in Tabelle 2 dargestellt.

### Beispiel 18:

Genau entsprechend dem Beispiel 3 wird eine Mischung aus silangepfropftem Poly-α-Olefin und Masterbatch hergestellt. Diese Mischung wird bei einer Temperatur von 130 °C mit einem 20 µm-Rakel auf eine Polyethylen-Folie appliziert, wobei das Auftragsgewicht ca. 11 g/m² beträgt. Auf diese Beschichtung wird ein PA-Vlies in der in Beispiel 17 beschriebenen Weise hinzugefügt, gelagert und gepruft. Das Ergebnis dieser Messungen ist in Tabelle 2 dargestellt.

### Beispiel 19 (nicht erfindungsgemäß)

Eine Polyethylenfolie wird in der in Beispiel 17 beschriebenen Weise mit dem unfunktionalisierten amorphen Poly-α-Olefin VESTOPLAST® 708 beschichtet. Auf diese Beschichtung wird ein PA-Vlies in der ebenfalls in Beispiel 17 beschriebenen Weise hinzugefügt, gelagert und geprüft. Das Ergebnis dieser Messungen ist in Tabelle 2 dargestellt.

**Tabelle 2:**

| Meßergebnisse der Beispiele 17 bis 19 | | | |
|---|---|---|---|
| Zugscherfestigkeit nach DIN 53283 [N/mm²] | Beispiel 17 | Beispiel 18 | Beispiel 19 *) |
| a) sofort nach Herstellung | 4,0 | 3,0 | 1,0 |
| b) nach 6 Tagen Lagerzeit | 6,0 | 4,0 | 1,5 |

| | | | |
|---|---|---|---|
| *) nicht erfindungsgemäß | | | |

### Beispiel 20:

Nach Aufschmelzen des silangepfropften amorphen Poly-α-Olefins aus Beispiel 1 bei 140 °C im Trockenschrank in einer N₂-Atmosphäre wird bei einer Temperatur von 140 °C eine Mischung aus den folgenden Bestandteilen hergestellt.

| | |
|---|---|
| 59 | Gew.-Tle. Produkt aus Beispiel 1 |
| 6 | Gew.-Tle. IPP (isotaktisches Polypropylen, MFR ca. 70, VESTOLEN® P 2000) |
| 1 | Gew.-Tl. HOSTAMONT TP AR 504 (maleinsäureanhydridmodifiziertes Polypropylen) |
| 8,5 | Gew.-Tle. ESCOREZ 5320 (hydriertes cyclisches Kohlenwasserstoffharz) |
| 8,5 | Gew.-Tle FORAL 105 (vollhydrierter Kolophoniumester) |
| 1 | Gew -Tl VISCOL® 550 P (Polypropylenwachs) |
| 17 | Gew -Tle. Sachtleben Schwerspatmehl CH 1177 |
| 0,2 | Gew.-Tle. IRGANOX 1076 (Stabilisator) |
| 0,1 | Gew.-Tle DHT-4A (Kostabilisator) |
| 0,05 | Gew.-Tle NAUGARD 445 (Stabilisator) |

Die Mischung weist folgende Eigenschaften auf:

| | |
|---|---|
| Erweichungspunkt (RuK) | 160 °C |
| Schmeizviskosität bei 190 °C | 12000 mPa s |
| Nadeipenetration (100/2575) | 8 [0 1 mm] |

Die Mischung wird auf ihre Einsetzbarkeit als Klebstoff in der Holzindustrie zur Kantenumleimung geprüft (ABS auf Holz). Die Ergebnisse dieser Messungen sind in Tabelle 4 dargestellt.

### Beispiel 21 (nicht erfindungsgemäß)

Die Mischung wird in der in Beispiel 20 beschriebenen Weise und Zusammensetzung hergestellt, mit dem Unterschied, daß in diesem Vergleichsbeispiel das unfunktionalisierte amorphe Poly-α-Olefin VESTOPLAST® 792 anstatt des silangepfropften amorphen Poly-α-Olefins eingesetzt wird Dieser VESTOPLAST-Typ wird deswegen gewählt, weil er im Vergleich mit den anderen zur Verfügung stehenden VESTOPLAST-Typen die Rezeptur mit den besten Eigenschaften ergibt.

Die Mischung weist folgende Eigenschaften auf:

| | |
|---|---|
| Erweichungspunkt (RuK) | 160 °C |
| Schmelzviskosität bei 190 °C | 120 000 mPa s |
| Nadelpenetration (100/25/5) | 10 [0.1 mm] |

Die Mischung wird ebenfalls auf ihre Einsetzbarkeit als Klebstoff in der Holzindustrie zur Kantenumleimung geprüft. Die Ergebnisse dieser Messungen sind in Tabelle 4 dargestellt.

### Beispiel 22.

Entsprechend dem Beispiel 3 wird eine Mischung aus 100 Gew.-Tln. der Masse aus Beispiel 20 und 3,4 Gew -Tln. des Masterbatches hergestellt.

Die Mischung weist folgende Eigenschaften auf.

| | |
|---|---|
| Erweichungspunkt (RuK) | 160 °C |
| Schmelzviskosität bei 190 °C | 9000 mPa s |
| Nadelpentration (100/25/5) | 9 [0,1 mm] |

Auch diese Mischung wurde auf ihre Einsetzbarkeit als Klebstoff in der Holzindustrie zur Kantenumleimung geprüft. Die Ergebnisse dieser Messungen sind in der Tabelle 4 dargestellt.

**Tabelle 4:**

| Meßergebnisse der Beispiele 20 bis 22 | | | |
|---|---|---|---|
| | Beispiel 20 | Beispiel 21*) | Beispiel 22 |
| Wärmestandfestigkeit nach WPS 68 | > 165 °C (Faserausriß aus dem Holz) | 110 - 115 °C | > 165 °C (Faserausriß aus dem Holz) |
| Offene Zeit | 20 s | 70 s | 21 s |
| Abbindezeit | 1 s | 1 s | 1 s |
| Schalwiderstand in Anlehnung an DIN 53 273 [N/mm] | 14,6 | 10,0 | 15,4 |

| | | | |
|---|---|---|---|
| *) nicht erfindungsgemäß | | | |

### Beispiel 23: Rezeptur zur Verklebung verschiedener Polymerlagen

| | |
|---|---|
| 15 | Tl. amorphes Poly-α-Olefin mit einer Viskositat von 50 000 mPa s (z B VESTOPLAST 750) |
| 35 | Tl. silangepfropftes amorphes Poly-α-Olefin aus Beispiel 1 |
| 30 | Tl. hydriertes cyclisches Kohlenwasserstoffharz (z B ESCOREZ 5300) |
| 20 | Tl. Weichmacher (z B. NAPVIS D 10) |
| 0.3 | Tl. Stabilisator (z. B IRGANOX 1076) |
| 0.1 | Tl. Kostabilisator (z B. DHT-4A) |
| 0.05 | Tl. Stabilisator (z B LOWINOX TBM-6) |

### Beispiel 24. Rezeptur für einen spruhbaren Schmelzkleber

| | |
|---|---|
| 70 | Tl. silangepfropftes amorphes Poly-α-Olefin aus Beispiel 1 |
| 25 | Tl. Kohlenwasserstoffharz (z B ESCOREZ 5380) |
| 5 | Tl. Weichmacher (z B. NAPVIS D 10) |
| 0.4 | Tl. Stabilisator (z B IRGANOX 1076) |

### Beispiel 25: Rezeptur für eine Mehrscheibenisolierglas-Dichtungsmasse mit guter Haftung und Anbindung an Metall und Glas.

| | |
|---|---|
| 38 | Tl. silangepfropftes amorphes Poly-α-Olefin aus Beispiel 1 |
| 15 | Tl. amorphes Poly-α-Olefin mit einer Viskositat von 50 000 mPa s (z. B VESTOPLAST 750) |
| 1,5 | Tl. Kautschuk (z B KRATON G 1657) |
| 30 | Tl. Weichmacher (z B OPPANOL B 15) |
| 7,5 | Tl. Butylkautschuk (z B. PB 402-24) |
| 7,5 | Tl. Weichmacher (z B BEVILITE 62-107) |
| 0.4 | Tl. Ruß (z. B. PRINTEX 60) |
| 0.3 | Tl. Stabilisator (z. B. IRGANOX 1076) |
| 0.1 | Tl. Kostabilisator (z. B DHT-4A) |
| 0.1 | Tl. Stabilisator (z. B. NAUGARD 445) |

### Beispiel 26: Rezeptur für eine Kantenumleimungsmasse, die sich durch niedrige Auftragsviskositat, exzellente Haftung und Warmestandfestigkeit auszeichnet.

| | |
|---|---|
| 59 | Tl. silangepfropftes amorphes Poly-α-Olefin aus Beispiel 1 |
| 5 | Tl. isotaktisches PP mit einer MTR von ca 70 (z B. VESTOLEN P 2000) |
| 1 | Tl. maleinsäureanhydridmodifiziertes PP (z. B. HOSTAMONT TP AR 504) |
| 8,5 | Tl. hydriertes cyclisches Kohlenwasserstoffharz (z B ESCOREZ 5320) |
| 8,5 | Tl. vollhydrierter Kolophoniumglycerinester (z B FORAL 105) |
| 1 | Tl. Polypropylenwachs (z. B. VISCOL 550 P) |
| 17 | Tl. Schwerspat (z B Schwerspat SACHTLEBEN 1177) |
| 0.2 | Tl. Stabilisator (z B. IRGANOX 1076) |
| 0.1 | Tl. Kostabilisator (z B. DHT-4A) |
| 0 05 | Tl. Stabilisator (z B NAUGARD 445) |

## Patentansprüche

1. Verwendung eines Klebstoffes, der ein silangepfropftes weitgehend amorphes Poly-α-Olefin enthält, wobei
a) das weitgehend amorphe Poly-α-Olefin ein ataktisches Polypropylen, ein ataktisches Polybuten-(1) oder ein Copolymer bzw. Terpolymer mit folgender Monomerenzusammensetzung ist:
0 bis 95 Gew.-% eines α-Olefins mit 4 bis 10 Kohlenstoffatomen,
5 bis 100 Gew-% Propen und
0 bis 20 Gew.-% Ethen,
b) das aufzupfropfende Silan mindestens eine olefinische Doppelbindung sowie eine bis drei direkt mit dem Silicium verbundene Alkoxygruppen besitzt und
c) der Klebstoff nach der Verklebung durch Wasser vernetzt wird,
zur Herstellung von Verklebungen.

2. Verwendung eines Klebstoffes gemäß Anspruch 1, wobei das Silan bei der Pfropfung in Mengen von 0,1 bis 10 Gew.-%, bezogen auf das Poly-α-Olefin, eingesetzt wird.

3. Verwendung eines Klebstoffes gemäß einem der vorhergehenden Ansprüche, wobei als Silan Vinyltrimethoxysilan, Vinyltriethoxysilan, Vinyl-tris(2-methoxy-ethoxy-)silan, 3-Methacryloxypropyltrimethoxysilan, 3-Methacryloxypropyltriethoxysilan, Vinyldimethylethoxysilan oder Vinylmethyldibutoxysilan aufgepfropft ist.

4. Verwendung eines Klebstoffes gemäß einem der vorhergehenden Ansprüche, wobei das weitgehend amorphe Poly-α-Olefin folgende Monomerenzusammensetzung aufweist:
3 bis 95 Gew.-% eines α-Olefins mit 4 bis 10 Kohlenstoffatomen,
5 bis 97 Gew.-% Propen und
0 bis 20 Gew.-% Ethen.

5. Verwendung eines Klebstoffes gemäß einem der vorhergehenden Ansprüche, wobei zusätzlich Klebharze, Wachse, andere Polymere, Weichmacher, Stabilisatoren, optische Aufheller, Antistatika, Gleit- und Antiblockmittel, Nucleierungsmittel, Füllstoffe, Pigmente und/oder flammhemmende Mittel enthalten sind.

6. Verwendung eines Klebstoffes gemäß Anspruch 5, wobei
a) 0,1 bis 50 Gew.-% Klebharze und/oder
b) 0,1 bis 50 Gew.-% Wachse und/oder
c) 0,1 bis 80 Gew.-% andere Polymere und/oder
d) 0, 1 bis 20 Gew.-% Weichmacher enthalten sind.

7. Verwendung eines Klebstoffes gemäß einem der vorhergehenden Ansprüche, wobei im Klebstoff mindestens 10 Gew.-% an silangepfropftem Poly-α-Olefin enthalten sind.

8. Verwendung eines Klebstoffes gemäß einem der vorhergehenden Ansprüche, wobei der Klebstoff ein Schmelzkleber ist.

## Revendications

1. Utilisation d'un adhésif qui renferme une poly-α-oléfine largement amorphe greffée avec un silane dans laquelle :
a) la poly-α-oléfine largement amorphe, est un polypropylène atactique, un polybutène (1) atactique, ou un copolymère ou un terpolymère ayant la composition en monomère suivante :
- de 0 à 95 % en poids d'une α-oléfine ayant de 4 à 10 atomes de carbone
- de 5 à 100 % en poids de propène, et
- de 0 à 20 % en poids d'éthène,
b) le silane qui doit être greffé possède au moins une double liaison oléfinique ainsi qu'un à trois groupes alkoxy liés directement au silicium, et
c) l'adhésif est réticulé par de l'eau après l'encollage,
en vue de la production de colles.

2. Utilisation d'un adhésif conformément à la revendication 1,
dans laquelle,
le silane est mis en oeuvre lors du greffage, en quantités allant de 0,1 à 10 % en poids, rapporté à la poly-α-oléfine.

3. Utilisation d'un adhésif conformément à l'une des revendications précédentes,
dans laquelle
comme silane, on greffe le vinyl triméthoxysilane, le vinyl triéthoxysilane, le vinyl tris-(2-méthoxyéthoxy) silane, le 3-méthacryloxypropyl triméthoxysilane, le 3-méthacryloxypropyl-triéthoxysilane, le vinyl diméthyléthoxysilane, ou le vinyl méthyldibutoxysilane.

4. Utilisation d'un adhésif conformément à l'une des revendications précédentes,
dans laquelle
la poly-α-oléfine largement amorphe, possède la composition en monomères suivante :
- de 3 à 95 % en poids d'une α-oléfine ayant de 4 à 10 atomes de carbone,
- de 5 à 97 % en poids de propène, et
- de 0 à 20 % en poids d'éthène.

5. Utilisation d'un adhésif conformément à l'une des revendications précédentes,
dans laquelle
des résines adhésives, des cires, d'autres polymères, des agents plastifiants, des agents stabilisants, des azurants optiques, des agents antistatiques, des agents lubrifiants et des agents antiblocage, des agents de nucléation, des substances de remplissage des pigments et/ou des agents ignifuges, sont contenus en supplément.

6. Utilisation d'un adhésif conformément à la revendication 5,
dans laquelle
a) de 0,1 à 50 % en poids d'une résine adhésive, et/ou
b) de 0,1 à 50 % en poids de cires et/ou
c) de 0,1 à 80 % en poids d'autres polymères et/ou
d) de 0,1 à 20 % en poids d'agent plastifiant
sont contenus.

7. Utilisation d'un adhésif conformément à l'une des revendications précédentes,
dans laquelle
dans l'adhésif au moins 10 % en poids d'une poly-α-oléfine greffée par un silane, sont contenus.

8. Utilisation d'un adhésif conformément à l'une des revendications précédentes dans laquelle l'adhésif est une colle par fusion.

## Claims

1. The use of an adhesive comprising a silane-grafted, largely amorphous poly-α-olefin, where
a) the largely amorphous poly-α-olefin is an atactic polypropylene, an atactic poly-1-butene or a copolymer or terpolymer having the following monomer composition:
from 0 to 95 % by weight of an α-olefin having 4 to 10 carbon atoms,
from 5 to 100 % by weight of propene and from 0 to 20 % by weight of ethene,
b) the silane to be grafted on has at least one olefinic double bond and from one to three alkoxy groups attached directly to the silicon, and
c) the adhesive is crosslinked by means of water after bonding,
for producing adhesive bonds.

2. The use of an adhesive according to claim 1, where the silane is employed for grafting in amounts of from 0.1 to 10 % by weight, based on the poly-α-olefin.

3. The use of an adhesive according to either of the preceding claims, where the silane grafted on is vinyltrimethoxysilane, vinyltriethoxysilane, vinyltris(2-methoxyethoxy)silane, 3-methacryloxypropyltrimethoxysilane, 3-methacryloxypropyltriethoxysilane, vinyldimethylethoxysilane or vinylmethyldibutoxysilane.

4. The use of an adhesive according to any one of the preceding claims, wherein the largely amorphous poly-α-olefin has the following monomer composition:
from 3 to 95 % by weight of an α-olefin having 4 to 10 carbon atoms,
from 5 to 97 % by weight of propene and
from 0 to 20 % by weight of ethene.

5. The use of an adhesive according to any one of the preceding claims, where tackifier resins, waxes, other polymers, plasticizers, stabilizers, optical brighteners, antistats, lubricants and antiblocking agents, nucleating agents, fillers, pigments and/or flame retardants are additionally present.

6. The use of an adhesive according to claim 5, where
a) from 0.1 to 50 % by weight of tackifier resins and/or
b) from 0.1 to 50 % by weight of waxes and/or
c) from 0.1 to 80 % by weight of other polymers and/or
d) from 0.1 to 20 % by weight of plasticizers are present.

7. The use of an adhesive according to any one of the preceding claims, where at least 10 % by weight of silane-grafted poly-α-olefin is present in the adhesive.

8. The use of an adhesive according to any one of the preceding claims, where the adhesive is a hotmelt adhesive.
